# EUROPEAN PATENT APPLICATION

(11) **EP 2 725 577 A2**
(43) Date of publication of application: **30.04.2014**
(21) Application number: 13180833.9
(22) Date of filing: 19.08.2013
(51) Int. Cl.: G10L 15/32, G10L 15/30

(54) **Voice recognition apparatus and voice recognition method thereof**

(30) Priority: 29.10.2012 KR 20120120374
(71) Applicant: Samsung Electronics Co., Ltd, Gyeonggi-do 443-742 (KR)
(72) Inventor: Bak, Eun-sang, Gyeonggi-do (KR); Kim, Myung-jae, Gyeonggi-do (KR); Liu, Yu, Gyeonggi-do (KR); Park, Geo-geun, Gyeonggi-do (KR)
(74) Representative: Taor, Simon Edward William

(57) **Abstract**

A voice recognition apparatus is provided. The voice recognition apparatus comprises: a voice receiver which receives a user's voice signal; a first voice recognition engine which receives the voice signal and performs a voice recognition process; a communication unit which receives the voice signal and transmits the voice signal to an external second voice recognition engine; and a controller which transmits the voice signal received through the voice receiver to at least one of the first voice recognition engine and the communication unit.

## Description

Apparatuses and methods consistent with the exemplary embodiments relate to a voice recognition apparatus and a voice recognition method thereof, and more particularly, to a voice recognition apparatus and a voice recognition method thereof which recognizes voice through a plurality of voice recognition engines having different functions.

A voice recognition technology recognizes a voice signal obtained by collecting a voice of a user, etc., as a signal corresponding to a predetermined language and may be utilized in various fields. In particular, the voice recognition technology has a convenient input method compared to conventional input methods including pressing a particular button with a finger, and is used in electronic apparatuses such as TV and mobile phones. For example, if a user's voice speaking a particular word such as "channel up" is input, a voice recognition engine in a TV recognizes a user's voice signal and adjusts a channel.

In line with the development of the voice recognition technology, the range of voice signals that may be recognized by the voice recognition engine has been extended.

While conventional voice recognition engines recognize only a limited number of words, recent voice recognition engines may recognize relatively longer sentences, and have the increased degree of accuracy.

The voice recognition engine may be classified into various types depending on its purpose of use, and may largely be classified into word recognition engines and consecutive word recognition engines. The word recognition engine recognizes only a limited number of words and thus does not have a large capacity. The word recognition engine may be utilized as an embedded engine of an electronic apparatus. The consecutive word recognition engine requires a large capacity but recognizes more words and sentences, and thus may be used as a server engine in the cloud environment that has been established in recent years.

The aforementioned word recognition engine and consecutive word recognition engine have different advantages and disadvantages in respect of capacity, data transmission and speed. Using both the word recognition engine and consecutive word recognition engine may contribute to more efficient use of the voice recognition function. However, if various types of voice recognition engines recognize a single voice signal, they may provide different recognition results and may cause a problem in performing control operations according to the voice signal.

Accordingly, one or more exemplary embodiments provide a voice recognition apparatus and a voice recognition method thereof which recognizes a voice through a plurality of voice recognition engines having different functions, and concurrently prevents conflict of voice recognition results provided by the voice recognition engines.

The foregoing and/or other aspects may be achieved by providing a voice recognition apparatus comprising: a voice receiver configured to receive a voice signal; a first voice recognition engine configured to receive the voice signal and perform a voice recognition process; a communication unit configured to receive the voice signal and transmit the voice signal to a second voice recognition engine; and a controller configured to transmit the voice signal received through the voice receiver to at least one from among the first voice recognition engine and the communication unit, based on a selection. The voice signal may be a user's voice signal.

The second voice recognition engine may be external to the voice recognition apparatus.

The first voice recognition engine may include an embedded engine which recognizes only preset words, and the second voice recognition engine may include a server engine which recognizes a plurality of consecutive words.

The apparatus may include an input unit which receives an input signal through a remote control device, and the remote control device may include at least one voice recognition engine-selecting button to select the voice recognition engine.

If the time during which the voice recognition engine-selecting button is selected is a predetermined time or more, the controller may transmit the voice signal to one from among the first voice recognition engine and the second voice recognition engine, and if the selected time is less than the predetermined time, transmit the voice signal to the other one from among the first voice recognition engine and the second voice recognition engine.

The voice recognition engine-selecting button of the remote control device may include a plurality of buttons corresponding to the first voice recognition engine and the second voice recognition engine, and if an input signal corresponding to one of the plurality of buttons is received, the controller may transmit the voice signal to the voice recognition engine corresponding to the button.

If the voice signal is received through the voice receiver, the controller may decide which one from among the first voice recognition engine and the second voice recognition engine will perform the voice recognition process, based on whether the received voice signal comprises a preset word.

The received voice signal may be transmitted to the first voice recognition engine and the second voice recognition engine, respectively, and the controller may determine whether the voice signal comprises the preset word, based on a voice recognition result provided by the first voice recognition engine.

The controller may determine whether a beginning of the voice signal comprises a preset voice.

The voice recognition apparatus may be implemented as a display apparatus including a display unit, and the controller may display on the display unit a user interface (UI) including information on a voice recognition engine that processes the voice signal.

The foregoing and/or other aspects may be also achieved by providing a voice recognition method of a voice recognition apparatus comprising: receiving, at the voice recognition apparatus, a voice signal; deciding at least one from among a first voice recognition engine and a second voice recognition engine, which will process the received voice signal; and transmitting the voice signal to at least one from among the first voice recognition engine and the second voice recognition engine based on the decision result. The voice signal may be a user's voice signal.

The first voice recognition engine may be comprised in the voice recognition apparatus and the second voice recognition engine may be provided external to the voice recognition apparatus.

The first voice recognition engine may be comprised in the voice recognition apparatus and the first voice recognition engine may include an embedded engine which recognizes only preset words, and the second voice recognition engine is provided external to the voice recognition apparatus and the second voice recognition engine may include a server engine which recognizes a plurality of consecutive words.

The method may further include receiving an input signal through a remote control device, and the remote control device may include at least one voice recognition engine-selecting button to select the voice recognition engine.

The deciding may include determining one from among the first voice recognition engine and the second voice recognition engine which processes the voice signal if time during which the at least one voice recognition engine-selecting button is selected is a predetermined time or more, and determining the other one from among the first voice recognition engine and the second voice recognition engine which processes the voice signal if the selected time is less than the predetermined time.

The voice recognition engine-selecting button of the remote control device may include a plurality of buttons corresponding to the first voice recognition engine and the second voice recognition engine, respectively, and the deciding may include determining which one from among the first voice recognition engine and the second voice recognition engine processes the voice signal corresponding to the at least one voice recognition engine-selecting button if an input signal corresponding to one from among the plurality of buttons is received.

The method may further include determining whether the received voice signal comprises a preset word, and the deciding may include determining which one from among the first voice recognition engine and the second voice recognition engine performs a voice recognition process, based on the determination result.

The received voice signal may be transmitted to the first voice recognition engine and the second voice recognition engines, and the determining may include determining whether the voice signal comprises the preset word, based on the voice recognition result provided by the first voice recognition engine.

The determining may include determining whether a beginning of the voice signal comprises the preset voice.

The voice recognition apparatus may be implemented as a display apparatus comprising a display unit to display an image thereon, and the method may further include displaying on the display unit a user interface (UI) including information on the voice recognition engine which processes the voice signal.

According to another exemplary embodiment, there is provide a voice recognition apparatus comprising: a voice receiver configured to receive a voice signal; a first voice recognition engine configured to receive the voice signal and perform a voice recognition process; a communication unit configured to receive the voice signal and transmit the voice signal to at least one from among a plurality of voice recognition engines; and a controller configured to transmit the voice signal received through the voice receiver to at least one from among the first voice recognition engine and the at least one from among the plurality of voice recognition engines.

According to yet another exemplary embodiment, there is provided a voice recognition method of a voice recognition apparatus comprising: receiving a voice signal; deciding at least one from among a plurality of voice recognition engines, which will process the received voice signal; and transmitting the voice signal to the at least one from among the plurality of recognition engines based on a decision result.

The above and/or other aspects will become apparent and more readily appreciated from the following description of the exemplary embodiments, taken in conjunction with the accompanying drawings, in which:
FIG. 1 is a control block diagram of a voice recognition apparatus according to an exemplary embodiment;
FIG. 2 briefly illustrates a remote control device according to the exemplary embodiment;
FIG. 3 briefly illustrates a user interface (UI) displayed on a display unit;
FIG. 4 is a flowchart of a voice recognition method according to a first exemplary embodiment; and
FIG. 5 is a flowchart of a voice recognition method according to a second exemplary embodiment.

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

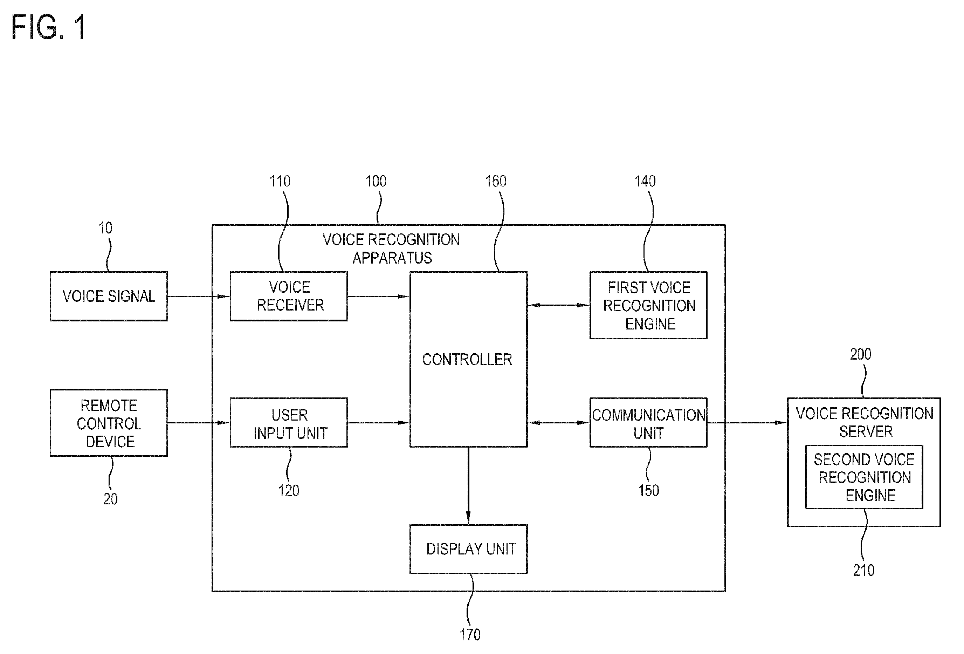

FIG. 1 is a control block diagram of a voice recognition apparatus 100 according to an exemplary embodiment.

As shown therein, the voice recognition apparatus 100 includes a voice receiver 110, a first voice recognition engine 140, a communication unit 150 and a controller 160, and depending on an embodiment type, may further include a user input unit 120 and a display unit 170.

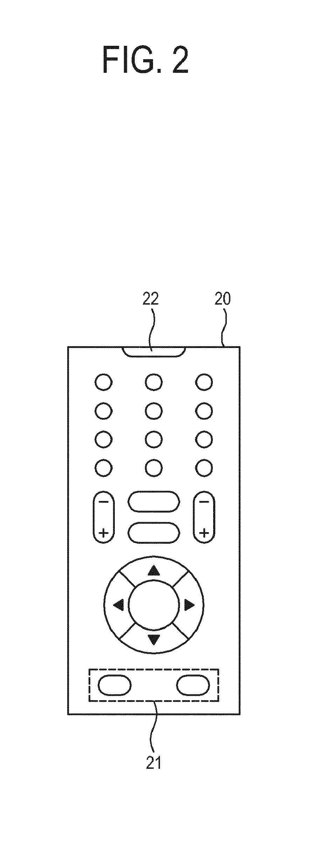

The voice receiver 110 receives a user's voice signal 10. The voice receiver 110 may be implemented as a microphone provided in the voice recognition apparatus 100 or may receive a voice signal collected through a microphone 22 (refer to FIG. 2) provided in the remote control device 20.

The first voice recognition engine 140 receives a voice signal and performs a voice recognition process. The voice recognition function is a series of processes for converting the voice signal into language data, and the first voice recognition engine 140 may convert the voice signal into language data by various known voice recognition methods and output the language data. The voice signal 10 received through the voice receiver 110 may include various noises in addition to the targeted user's voice, and thus only a user's voice may be extracted from the voice signal through pre-treatment process such as analysis of frequency, and the voice recognition process may be performed to the extracted voice component. The voice recognition method of the voice recognition engine includes various known methods, which will not be explained herein.

The first voice recognition engine 140 may be implemented as an embedded engine of the voice recognition apparatus 100, or as additional hardware or software executed by the controller 160 which will be described later. The embedded engine may recognize only a predetermined number of words. For example, if the voice recognition apparatus 100 is implemented as a display apparatus such as a TV, the embedded engine may be used to recognize a user's input to control the TV. If a user inputs a voice signal such as "channel up", "power off", "mute", etc., the first voice recognition engine 140 may recognize the voice signal and if the voice signal is one of preset words, may output the recognized language data. Such embedded engine may be implemented only as a memory in a small capacity and provides faster speed, but is limited in recognizing words. Thus, the embedded engine may process only a simple input such as TV control.

The voice recognition apparatus 100 may further include a communication unit 150 which receives and transmits a voice signal to an external second voice recognition engine 210. The voice recognition apparatus 100 may receive language data generated as a result of the voice recognition of the second voice recognition engine 210. The second voice recognition engine 210 may be included in an external voice recognition server 200. The communication unit 150 may transmit a voice signal to the voice recognition server 200 through a network, and receive a voice recognition result from the second voice recognition engine 210.

As described above, unlike the first voice recognition engine 140 as an embedded engine, the second voice recognition engine 210 is implemented as a server and thus may recognize various words or consecutive words. For example, input of a particular search word into a search window, input of sentences through an application such as short message service (SMS), etc. requires recognition of many words, and such recognition is not easy through the embedded engine, but may be performed through the second voice recognition engine 210 implemented as a server. That is, if the second voice recognition engine 210 is used, the voice signal should be transmitted to the voice recognition server 200 and this slows down the speed, but provides a better performance.

Accordingly, the voice recognition apparatus 100 according to the present exemplary embodiment is implemented to recognize the voice signal input through the voice receiver 110 by using both the first voice recognition engine 140 and the second voice recognition engine 210. If a particular voice signal is input, the voice recognition apparatus 100 should decide to send the input voice signal to which voice recognition engine due to difference in purpose of use according to characteristics of the voice recognition engines. If both the first voice recognition engine 140 and the second voice recognition engine 210 output the voice recognition result, a plurality of operations may be performed with respect to a single input, and such input may not be performed as desired by a user. However, it is easy for the voice recognition apparatus 100 to decide the voice recognition engine only based on the voice signal, and such decision may be preferably made through additional information as well as the voice signal.

The controller 160 may be implemented as a microprocessor such as a CPU or Micom which controls the voice recognition apparatus 100 as a whole. In particular, the controller 160 performs a control operation to transmit the voice signal from the voice receiver 110 to at least one of the first voice recognition engine 140 and the communication unit 150. To do so, the controller 150 may include a voice branch unit (not shown) which, like a demultiplexer, switches an input signal to a particular route.

The criteria for determining the voice recognition engine to which the voice signal is transmitted is based on a user's selection, and the following exemplary embodiment may be provided.

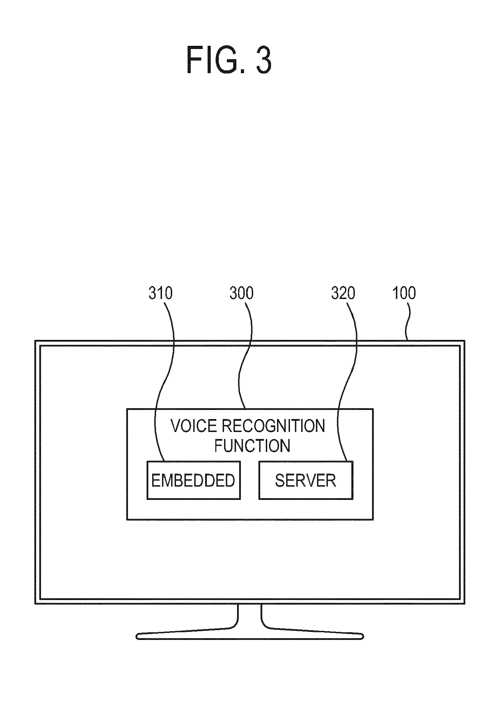

According to a first exemplary embodiment, the controller 150 may decide the voice recognition engine to which the voice signal is transmitted, according to a user's manipulation through the remote control device 20. As shown in FIG. 3, a user may input an input signal to control the voice recognition apparatus 100 through the remote control device 20. As shown in FIG. 2, the remote control device 20 may include at least one additional button 21 to select the voice recognition engine in addition to typical buttons for selecting channels and adjusting volume. The remote control device 20 may transmit a user's input signal to the voice recognition apparatus 100 through local area communication such as infrared or Bluetooth, and the voice recognition apparatus 100 may further include a user input unit 120 to receive the user's input signal transmitted by the remote control device 20. As described above, the remote control device 20 may include a microphone 22 to receive a voice signal.

As a detailed example of the first exemplary embodiment, if the time during which a voice recognition engine-selecting button 21 (hereinafter, to be also called the selection button) is pressed is a predetermined duration of time, the controller 150 may transmit the voice signal to one of the first voice recognition engine 140 and the second voice recognition engine 210, and if the pressing time is less than predetermined duration of time, the controller 150 may transmit the voice signal to the other one of the first voice recognition engine 140 and the second voice recognition engine 210. For example, if a user presses the selection button 21 for less than one second and then inputs a voice signal, the controller 140 may transmit the voice signal to the first voice recognition engine 140. If a user presses the selection button 21 for one second or longer and then inputs a voice signal, the controller 150 may transmit the voice signal to the second voice recognition engine 210. As described above, the first voice recognition engine 140 may be implemented as an embedded engine in a small capacity storage or device, and instead recognize simple words only. The second voice recognition engine may recognize various words and sentences but has a slower processing speed. Thus, if a user's voice signal may be recognized as a simple word such as a change of channel and a fast operation for controlling the voice recognition apparatus 100 is required, a user may shortly press the selection button 21 and then input the voice signal. If a user desires to input a longer sentence such as input of an Internet search word, he/she may press the selection button 21 for longer time and then input the voice signal.

As another example of the first exemplary embodiment, the selection button 21 of the remote control device 20 may include a plurality of buttons 21 corresponding to the first and second voice recognition engines 140 and 210, respectively. If a user presses the selection button corresponding to the first voice recognition engine 140 and then inputs a voice signal, the controller 150 transmits the voice signal to the first voice recognition engine 140 to recognize voice by the first voice recognition engine 140. If a user presses the selection button corresponding to the second voice recognition engine 210 and inputs a voice signal, the controller 150 transmits the voice signal to the second voice recognition engine 210 through the communication unit 150 to recognize voice by the second voice recognition engine 210.

The first exemplary embodiment relates to the method for selecting the voice recognition engine through the button of the remote control device 20. A second exemplary embodiment which will be described later provides a method for selecting a voice recognition engine according to a voice signal recognition result.

According to the second exemplary embodiment, upon receiving a voice signal through the voice receiver 110, the controller 160 may decide which one of the first and second voice recognition engines 140 and 210 will perform a voice recognition process, based on whether the received voice signal includes a preset word. More specifically, the controller 150 may decide the voice recognition engine depending on whether the beginning of the voice signal includes a preset voice.

For example, if a voice signal includes a word "command", the controller 150 may select the first voice recognition engine 140 to perform a voice recognition process. In this case, if a user inputs a voice "command, channel up", the first voice recognition engine 140 performs a voice recognition process, and according to the voice recognition result, the controller 150 performs an operation corresponding to "channel up". If a user inputs a voice "let me know today's weather", the voice signal is transmitted to the second voice recognition engine 210, which will perform the voice recognition process.

According to the second exemplary embodiment, the voice signal is transmitted to the first and second voice recognition engines 140 and 210, respectively. If the voice signal includes a preset word according to the voice recognition result provided by the first voice recognition engine 140, the controller 160 performs a control operation according to language data generated as a result of the voice recognition by the first voice recognition engine 140. The second voice recognition engine 210 may also receive the voice signal and transmit a voice recognition result to the voice recognition apparatus 100, but, in some instances, the controller 160 does not need to perform an operation according to the voice recognition result provided by the second voice recognition engine 210. If the voice signal does not include a preset word, the voice recognition result provided by the first voice recognition engine 140 is disregarded, and the controller 160 performs a control operation according to the voice recognition result provided by the second voice recognition engine 210.

The voice recognition apparatus 100 according to the present exemplary embodiment may be implemented as a display apparatus including a display unit 170. In this case, the controller 150 may control the display unit 170 to display thereon a user interface (UI) 300 including information on the voice recognition engine processing the voice signal. As shown in FIG. 3, if a voice signal is input and an operation such as change of channel or input of a search word is performed according to the voice recognition result, the display unit 170 may display thereon the UI 300 an indication of which of the voice recognition engines will perform an operation according to the voice recognition result, and provide a user with a feedback. According to the first exemplary embodiment, the voice recognition engine which will perform the voice recognition process is decided based on the time during which the selection button is pressed, and the information on pressing time may be also displayed through the UI 300.

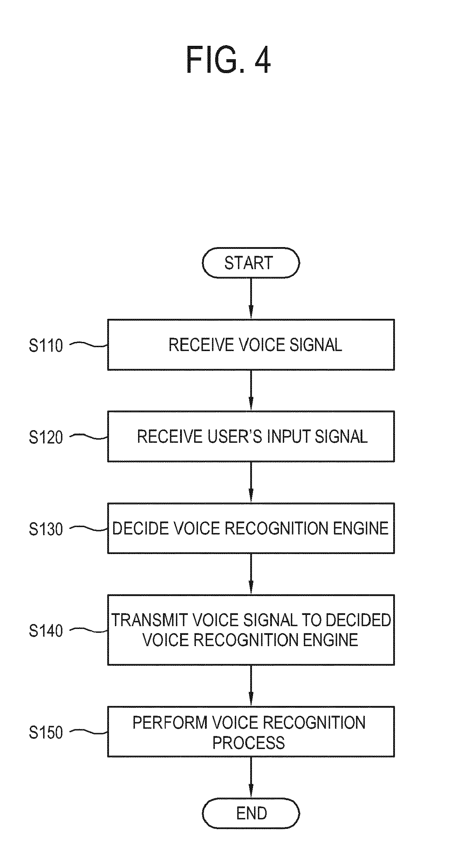

The voice recognition apparatus 100 according to the exemplary embodiment may perform the voice recognition process by using a plurality of voice recognition engines having different functions, and decide a voice recognition engine which will process the voice signal input by a user, and perform the voice recognition process through the voice recognition engine which meets the purpose of use and a user's intention. FIG. 4 is a flowchart of a voice recognition method of the voice recognition apparatus according to the first exemplary embodiment.

The voice recognition apparatus according to the present exemplary embodiment may perform the voice recognition process through the first or second voice recognition engine. The first voice recognition engine is implemented as an embedded engine within the voice recognition apparatus, and has a smaller capacity but may recognize only a predetermined number of words. On the contrary, the second voice recognition engine is implemented as a server engine, provided in an external voice recognition server outside the voice recognition apparatus and may recognize a number of words and sentences.

The voice recognition apparatus receives a user's voice signal (S110). The voice recognition apparatus 100 may receive a user's voice through a microphone therein or receive a voice signal collected by a microphone of the remote control device 20.

The voice recognition apparatus 100 decides which one of the first voice recognition engine included in the voice recognition apparatus 100 and the second voice recognition engine located outside the voice recognition apparatus 100, will process the received voice signal, based on a user's selection (S130).

The voice recognition apparatus 100 transmits the voice signal to at least one of the first voice recognition engine and the second voice recognition engine, based on the selection result (S140), and the voice recognition engine which has received the voice signal performs the voice recognition process (S150). The voice recognition apparatus 100 performs a control operation such as change of channel or input of search word according to the voice recognition result.

The decision is based on the user's selection. The voice recognition method according to the first exemplary embodiment further includes an operation of receiving a user's input signal through the remote control device, and may decide at least one of the first and second voice recognition engines based on the user's input signal. To do so, the remote control device may include at least one button for selecting the voice recognition engine.

If time during which the selection button is pressed is a predetermined time or longer, one of the first and second voice recognition engines may be decided to process the voice signal. If the pressing time is less than a predetermined time, the other one of the first and second voice recognition engines may be decided to process the voice signal.

According to another exemplary embodiment, the voice recognition engine-selecting button of the remote control device may include a plurality of buttons corresponding to the first and second voice recognition engines, respectively. The decision may include deciding which one of the first and second voice recognition engines corresponds to the selected button to process the voice signal if an input signal corresponding to one of the plurality of buttons is received.

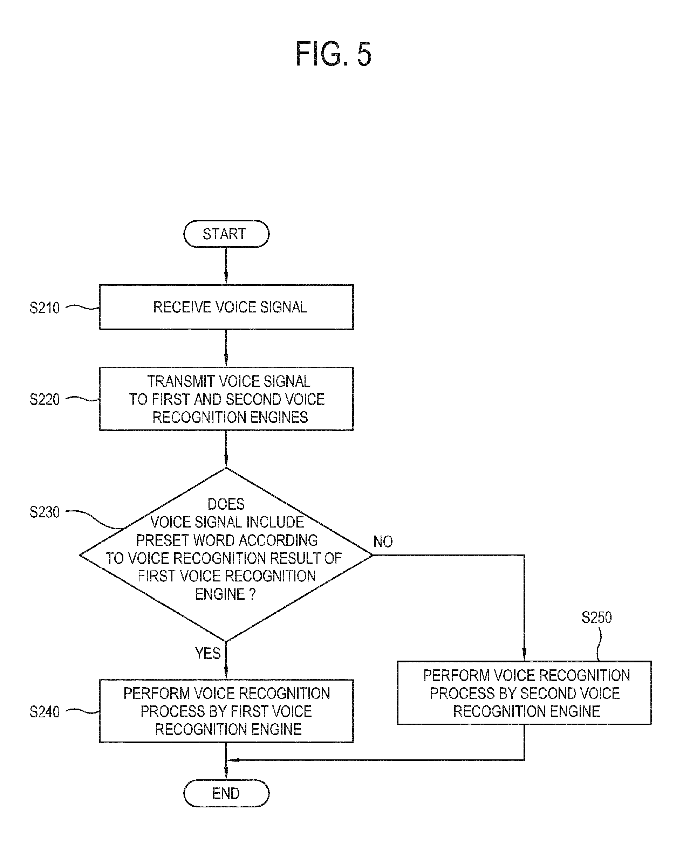

The voice recognition apparatus 100 may be implemented as a display apparatus including a display unit to display an image thereon. The voice recognition method may further include an operation of displaying on the display unit a UI including information on the voice recognition engine which will process the voice signal. FIG. 5 is a flowchart of a voice recognition method of a voice recognition apparatus according to a second exemplary embodiment.

The voice recognition apparatus 100 receives a user's voice signal (S210).

The received voice signal is transmitted to the first and second voice recognition engines, respectively (S220).

According to the second exemplary embodiment, based on whether the received voice signal includes a preset word, one of the first and second voice recognition engines may be determined to process the voice recognition process (S230). In this case, the voice recognition engine may be determined based on whether the beginning of the voice signal includes a preset word.

If it is determined that the voice signal includes a preset word, the first voice recognition engine performs the voice recognition process. If it is determined that the voice signal does not include a preset word, the second voice recognition engine may perform the voice recognition process (S250).

The voice recognition method of the voice recognition apparatus according to the exemplary embodiments may be performed through a plurality of voice recognition engines having different functions, and may decide which voice recognition engine will process the voice signal input by a user, and thus the voice recognition engine which meets a purpose of use and a user's intention may perform the voice recognition process.

As described above, a voice recognition apparatus and a voice recognition method thereof may perform a voice recognition process through a plurality of voice recognition engines having different functions, and concurrently may prevent conflict of voice recognition results provided by voice recognition engines.

Although a few exemplary embodiments have been shown and described, it will be appreciated by those skilled in the art that changes may be made in these exemplary embodiments without departing from the principles of the invention, the range of which is defined in the appended claims and their equivalents.

## Claims

1. A voice recognition apparatus comprising:
a voice receiver configured to receive a voice signal;
a first voice recognition engine configured to receive the voice signal and perform a voice recognition process;
a communication unit configured to receive the voice signal and transmit the voice signal to a second voice recognition engine; and
a controller configured to transmit the voice signal received through the voice receiver to at least one from among the first voice recognition engine and the communication unit.

2. The voice recognition apparatus according to claim 1, wherein the first voice recognition engine comprises an embedded engine which recognizes only preset words, and the second voice recognition engine comprises a server engine which recognizes a plurality of consecutive words.

3. The voice recognition apparatus according to claim 1 or 2, further comprising an input unit which receives an input signal through a remote control device, wherein the remote control device comprises at least one voice recognition engine-selecting button to select the voice recognition engine.

4. The voice recognition apparatus according to claim 3, wherein if time during which the at least one voice recognition engine-selecting button is selected is a predetermined time or more, the controller transmits the voice signal to one from among the first voice recognition engine and the second voice recognition engine, and if the selected time is less than the predetermined time, transmits the voice signal to the other one from among the first voice recognition engine and the second voice recognition engine.

5. The voice recognition apparatus according to claim 3 or 4, wherein the at least one voice recognition engine-selecting button of the remote control device comprises a plurality of buttons corresponding to the first voice recognition engine and the second voice recognition engine, and if an input signal corresponding to one from among the plurality of buttons is received, the controller transmits the voice signal to the voice recognition engine corresponding to the button.

6. The voice recognition apparatus according to any one of claims 1 to 5, wherein if the voice signal is received through the voice receiver, the controller determines which one from among the first voice recognition engine and the second voice recognition engine will perform the voice recognition process, based on whether the received voice signal comprises a preset word.

7. The voice recognition apparatus according to claim 6, wherein the received voice signal is transmitted to the first voice recognition engine and the second voice recognition engine, respectively, and the controller determines whether the voice signal comprises the preset word, based on a voice recognition result provided by the first voice recognition engine.

8. The voice recognition apparatus according to one of claims 1 to 7, wherein the controller determines whether a beginning of the voice signal comprises a preset word.

9. A voice recognition method of a voice recognition apparatus comprising:
Receiving, at the voice recognition apparatus, a voice signal;
deciding at least one from among a first voice recognition engine and a second voice recognition engine, which will process the received voice signal; and
transmitting the voice signal to at least one from among the first voice recognition engine and the second voice recognition engine based on a decision result.

10. The voice recognition method according to claim 9, wherein the first voice recognition engine is comprised in the voice recognition apparatus and the first voice recognition engine comprises an embedded engine which recognizes only preset words, and the second voice recognition engine is provided external to the voice recognition apparatus and the second voice recognition engine comprises a server engine which recognizes a plurality of consecutive words.

11. The voice recognition method according to claim 10, further comprising receiving an input signal through a remote control device, wherein the remote control device comprises at least one voice recognition engine-selecting button to select the voice recognition engine.

12. The voice recognition method according to claim 11, wherein the deciding comprises determining one from among the first voice recognition engine and the second voice recognition engine which processes the voice signal if time during which the at least one voice recognition engine-selecting button is selected is a predetermined time or more, and determining the other one from among the first voice recognition engine and the second voice recognition engine which processes the voice signal if the selected time is less than the predetermined time.

13. The voice recognition method according to claim 11 or 12, wherein the at least one voice recognition engine-selecting button of the remote control device comprises a plurality of buttons corresponding to the first voice recognition engine and the second voice recognition engine, respectively, and the deciding comprises determining which one from among the first voice recognition engine and the second voice recognition engine processes the voice signal corresponding to the at least one voice recognition engine-selecting button if an input signal corresponding to one from among the plurality of buttons is received.

14. The voice recognition method according to one of claims 9 to 13, further comprising determining whether the received voice signal comprises a preset word, wherein the deciding comprises determining which one from among the first voice recognition engine and the second voice recognition engine performs a voice recognition process, based on the determination result.

15. The voice recognition method according to claim 14, wherein the received voice signal is transmitted to the first voice recognition engine and the second voice recognition engine, and the determining comprises determining whether the voice signal comprises the preset word, based on the voice recognition result provided by the first voice recognition engine.
